# EUROPEAN PATENT SPECIFICATION

(11) **EP 3 010 806 B1**
(45) Date of publication and mention of the grant of the patent: **15.03.2017**
(21) Application number: 14812316.9
(22) Date of filing: 20.06.2014
(51) Int. Cl.: B64D 39/06, G05D 16/10

(54) **DUAL REDUNDANT AERIAL REFUELING COUPLING REGULATOR ASSEMBLY**
ZWEIFACH REDUNDANTE LUFTBETANKUNGSKUPPLUNGSREGELANORDNUNG
ENSEMBLE RÉGULATEUR DE COUPLAGE DE RAVITAILLEMENT EN CARBURANT AÉRIEN REDONDANT ET DOUBLE

(30) Priority: 21.06.2013 US 201361837767 P
(43) Date of publication of application: 27.04.2016
(73) Proprietor: Eaton Corporation, Cleveland, OH 44122 (US)
(72) Inventor: REINHOLDT, James, William, San Clemente, CA 92673 (US); VU, Anh, Hung, Santa Ana, CA 92075 (US)
(74) Representative: Schwan Schorer & Partner mbB
(86) International application number: PCT/US2014/043398
(87) International publication number: WO 2015/026436

(56) References cited:
- EP-A1- 2 808 259
- US-A- 3 586 033
- US-A1- 2004 173 267
- US-A1- 2010 243 061

## Description

### TECHNICAL FIELD

The present disclosure relates generally to an aerial refueling coupling, including an aerial refueling coupling regulator assembly that is dual redundant and configured to reduce the pressure drop through a coupling.

### BACKGROUND

Aerial refueling systems are used to transfer fuel from a tanker aircraft to a receiver aircraft during flight. One type of aerial refueling system is commonly referred to as a probe-and-drogue system. This type of refueling system may generally include a flexible fuel hose that extends from a hose drum unit, which can be mounted in a wing pod or fuselage of the tanker aircraft. A refueling coupling can be attached to a free end of the fuel hose. The coupling may generally consist of a regulator and a latch housing. A first end of the regulator can be attached to the fuel hose and the latch housing may be attached to a second or ball end of the regulator. The latch housing may provide latching mechanisms to latch a probe of the receiver aircraft to the refueling coupling. A drogue can be attached to the free end of the latch housing and can be configured to stabilize the fuel hose during flight and may provide a funnel-shaped structure that facilitates the insertion of the probe in the latch housing. Once a connection is made between the refueling coupling and the probe, fuel can be transferred from the tanker aircraft to the receiver aircraft.

The refueling coupling may be configured to regulate the outlet pressure from the coupling and limit downstream pressure surges that might otherwise damage the probe or other components in the fuel system of the receiver aircraft.

Although current refueling couplings may function in a suitable manner, it can be desirable to provide an improved refueling coupling that is dual redundant and configured to reduce the pressure drop through the coupling.

In US 2010/243061 A1 there is disclosed a refueling coupling regulator assembly as it is defined in the pre-characterizing portion of claim 1.

### SUMMARY

The present invention is a refueling coupling regulator assembly as it is defined in claim 1.

Various aspects of the present disclosure will become apparent to those skilled in the art from the following detailed description of the various embodiments, when read in light of the accompanying drawings.

### BRIEF DESCRIPTION OF THE DRAWINGS

Embodiments of the present disclosure will now be described, by way of example, with reference to the accompanying drawings.
FIG. 1 is a perspective view of a refueling coupling regulator assembly in accordance with an embodiment of the present disclosure.
FIG. 2 is a side elevational view of the refueling coupling regulator assembly shown in FIG. 1.
FIG. 3 is a cross-sectional side view of the refueling coupling regulator assembly shown in FIG. 1, shown with a first stage pressure regulator and a second stage pressure regulator in an un-modulated position.
FIG. 4 is a cross-sectional side view of the refueling coupling regulator assembly shown in FIG. 1, shown with the first stage pressure regulator in a modulated position and the second stage pressure regulator in the un-modulated position.
FIG. 5 is a cross-sectional side view of the refueling coupling regulator assembly shown in FIG. 1, shown with the first stage pressure regulator in the un-modulated position and the second stage pressure regulator in a modulated position.
FIG. 6 is a cross-sectional side view of the refueling coupling regulator assembly shown in FIG. 1, shown with the first stage pressure regulator and the second stage pressure regulator in the modulated position.

### DETAILED DESCRIPTION

Reference will now be made in detail to embodiments of the present disclosure, examples of which are described herein and illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the scope of the invention as defined by the appended claims.

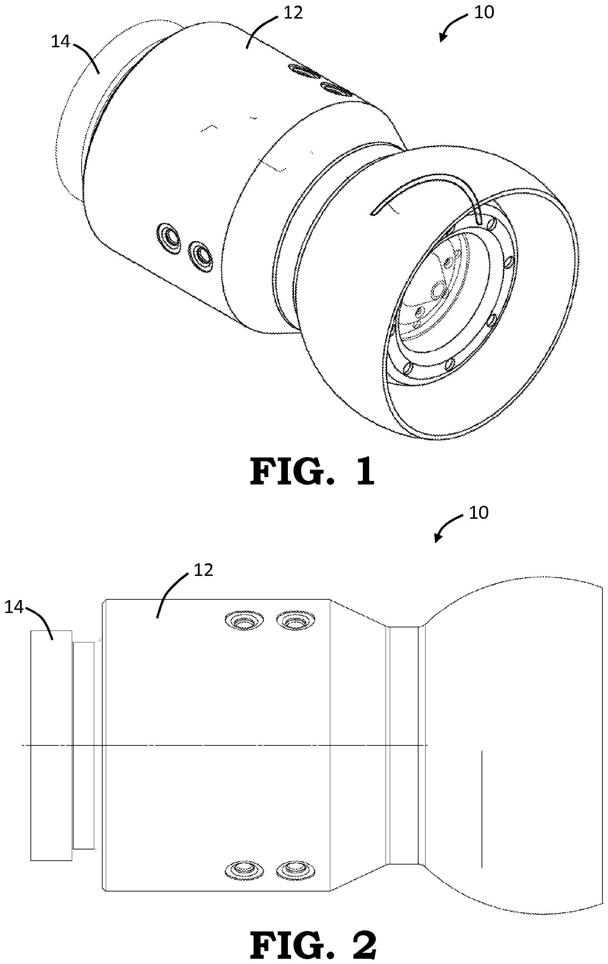

Referring now to FIGS. 1 and 2, an aerial refueling coupling regulator assembly 10 is generally illustrated in accordance with an embodiment of the present disclosure. The refueling coupling regulator assembly 10 may be a generally cylindrical device that can, for example, be attached to a free end of a flexible fuel hose extending from a tanker aircraft. In turn, a latch housing and a drogue may be secured to the refueling coupling regulator assembly 10. The latch housing can be configured to receive a probe that is provided on a receiver aircraft and the drogue can be configured to stabilize the fuel hose during flight. It should be appreciated, however, that the refueling coupling regulator assembly 10 can be used in any suitable environment and for any suitable purpose.

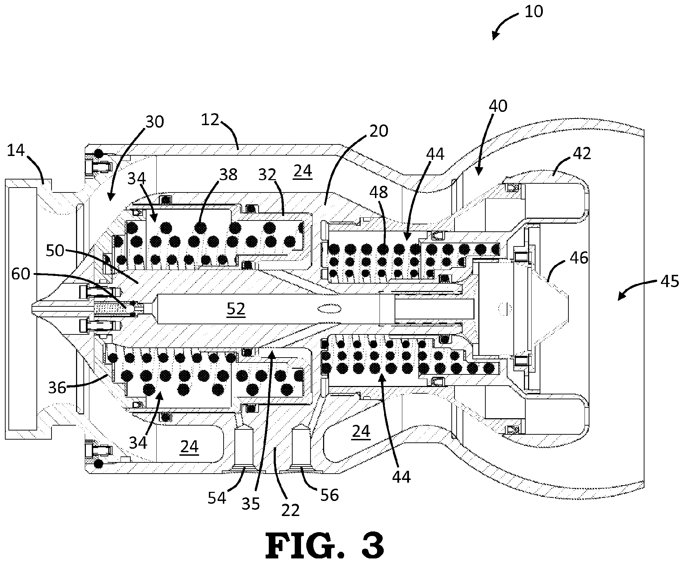

Referring now to FIG. 3, a cross-sectional side view of the refueling coupling regulator assembly 10 is provided. As generally illustrated, in an embodiment, the refueling coupling regulator assembly 10 includes a housing 12. A first end of the housing 12 can define an inlet opening of the refueling coupling regulator assembly 10 and may be generally cylindrical in shape. A second end of the housing 12 can define an outlet opening of the refueling coupling regulator assembly 10 and may be generally semi- spherical in shape, a purpose of which will be described further below. In other embodiments, however, the housing 12 may have any suitable shape or configuration of shapes.

As generally shown, an end flange 14 may be secured to or otherwise provided at the inlet opening of the housing 12. The illustrated end flange 14 can define an annular collar, for example, that may be configured to connect the refueling coupling regulator assembly 10 to the fuel hose extending from the tanker aircraft. The end flange 14 may be secured to the housing 12 using a plurality of fasteners or any other suitable connection such as, for example, a clamped connection. In other embodiments, however, the end flange 14 may be an integral part of the housing 12.

The outlet opening of the housing 12 can be configured to receive or otherwise mate with a corresponding semi- spherical portion of the latch housing, thereby forming a ball-and-socket connection. In embodiments, the latch housing may be, in large measure, conventional in the art.

As generally shown in **FIG. 3**, the housing 12 may also include an inner valve body 20 that can be disposed within and rigidly supported by the housing 12. The inner valve body 20 may be integrally formed with the housing 12 and can be supported by any number of radial supports 22. In other embodiments, however, the inner valve body 20 can be a separate component that is rigidly supported within the housing 12 in a suitable manner.

A fluid path 24 may be defined between an inner surface of the housing 12 and an outer surface of the inner valve body 20 to allow fuel or other liquids to flow through the refueling coupling regulator assembly 10. The fluid path 24 can be specifically designed or configured to reduce a pressure drop between the inlet opening and the outlet opening of the housing 12. In doing so, an inlet pressure of the refueling coupling regulator assembly 10 may be significantly reduced by the illustrated fluid path 24, while at the same time increasing the flow rate and maintaining a desired outlet pressure of the refueling coupling regulator assembly 10.

The inner valve body 20 may include a first stage pressure regulator, indicated generally at 30, and a second stage pressure regulator, indicated generally at 40. As will be generally described in further detail below, the first and second stage pressure regulators 30 and 40 can function as modulating valve mechanisms to regulate the outlet pressure of the refueling coupling regulator assembly 10. In an embodiment, the first stage pressure regulator 30 can be located near the inlet opening of the housing 12, and the second stage pressure regulator 40 can be located near the outlet opening of the housing 12. Each pressure regulator 30 and 40 will now be described in further detail.

The first stage pressure regulator 30 may include a valve member 32 that can be supported for axial movement by the inner valve body 20. As generally shown, a portion of the valve member 32 can be supported within the inner valve body 20 to separate a first chamber 34 from a second chamber 35. The first chamber 34 can define an internal volume that can be configured to contract or expand in an axial direction towards the inlet or outlet opening of the housing 12. The second chamber 35 can define an internal volume that is configured to contract or expand in an axial direction opposite of the first chamber 34 (*i.e.*, if the volume of the second chamber 35 expands, the volume in the first chamber 34 contracts). The changing volumes in the first and second chambers 34 and 35 can cause the valve member 32 to move in an axial direction, which can regulate the outlet pressure of the refueling coupling regulator assembly 10.

An end cap 36 can be secured to an end of the inner valve body 20 nearest the inlet opening of the housing 12 to enclose the first chamber 34. A plurality of valve springs 38 may be disposed within the first chamber 34 between the end cap 36 and the valve member 32. The valve springs 38 may be configured to bias the valve member 32 in an un-modulated position, such as generally described in further detail below. The valve springs 38 can be specifically selected and arranged in a suitable manner to provide a spring load and spring rate to maintain the outlet pressure of the refueling coupling regulator assembly 10, for example, within a desired pressure range.

The second stage pressure regulator 40 may include a valve member 42 that can be supported for axial movement by the inner valve body 20. As generally illustrated, a portion of the valve member 42 can be supported within the inner valve body 20 and may be configured to separate a third chamber 44 from a fourth chamber 45. The third chamber 44 may define an internal volume that can be configured to contract or expand in an axial direction towards the inlet or outlet opening of the housing 12. The fourth chamber 45 may define an internal volume that can be configured to contract or expand in an axial direction opposite of the third chamber 44 (*i.e.*, if the volume in the fourth chamber 45 expands, the volume in the third chamber 44 contracts). The changing volumes in the third and fourth chambers 44 and 45 can cause the valve member 42 to move in an axial direction, which can regulate the outlet pressure of the refueling coupling regulator assembly 10.

An end cap 46 can be secured to a trailing end of the inner valve body 20 nearest the output opening of the housing 12 to create a stop for the valve member 42 in the un-modulated position. A plurality of valve springs 48 may be disposed within the third chamber 44 between an inner end surface of the third chamber 44 and the valve member 42. The valve springs 48 may be configured to bias the valve member 42 in an un-modulated position, for example, as generally described in further detail below. The valve springs 48 can be specifically selected and arranged in a suitable manner to provide a spring load and spring rate to maintain the outlet pressure of the refueling coupling regulator assembly 10 within a desired pressure range.

The inner valve body 20 may include a stem 50 that can axially extend along a centerline of the refueling coupling regulator assembly 10. In an embodiment, the stem 50 can define a center passage 52 that may axially extend through a center of the stem 50. An open end of the center passage 52 may be in fluid communication with the outlet opening of the housing 12. As generally shown, the center passage 52 may further include radial passages that can extend generally radially therefrom and provide fluid communication between the center passage 52 and the second chamber 35 and the fourth chamber 45. Embodiments of such passages are generally described in further detail below.

A first vent 54 and a second vent 56 may extend in a generally radial direction through at least one radial support 22 for communication with the first and third chambers 34 and 44, respectively. For example and without limitation, the first vent 54 may be configured to provide atmospheric air communication between an exterior of the housing 12 and the first chamber 34 of the first stage pressure regulator 30. The second vent 56 may be configured to provide atmospheric air communication between the exterior of the housing 12 and the third chamber 44 of the second stage pressure regulator 40. The first and second vents 54 and 56 may be configured to relieve air pressure that may otherwise become trapped in the first and/or third chambers 34 and 44, respectively.

A pressure relief valve 60 may be provided, for example, at a leading end of the stem 50 nearest the inlet opening of the housing 12, and may be configured to relieve trapped pressure in the center passage 52. For example, the pressure relief valve 60 may comprise a ball valve mechanism that can be biased in a closed position by a spring member or the like. Therefore, when pressure in the center passage 52 exceeds a specified or predetermined level, the pressure relief valve 60 can be configured to open and release pressure from the center passage 52 through an aperture formed in the end cap 36 into the inlet opening of the housing 12.

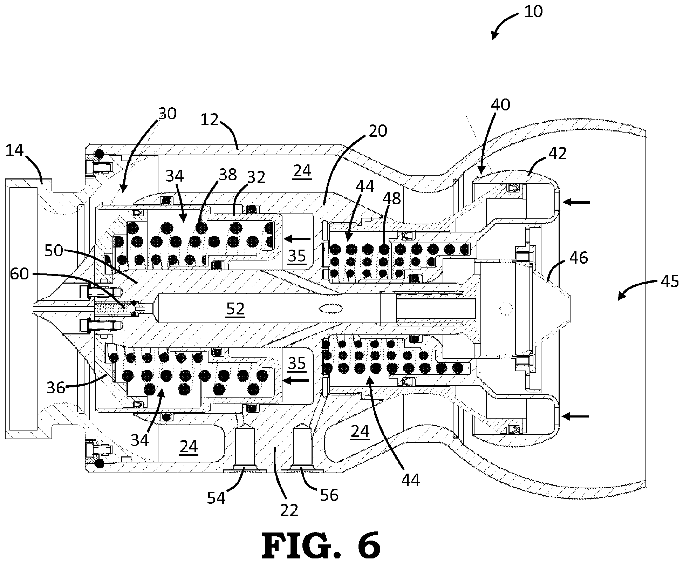

Operation of the refueling coupling regulator assembly 10 in accordance with an embodiment of the present disclosure will now be described with reference to **FIGS. 3** through **6**. As generally shown in **FIG. 3**, both the first and second stage pressure regulators 30 and 40 may initially be in an un-modulated or a failed open position. In this position, liquid fuel may be permitted to flow generally unrestrained through the fluid path 24 of the refueling coupling regulator assembly 10. Such an operating condition might be typical when the outlet pressure of the refueling coupling regulator assembly 10 is below the pressure that the refueling coupling regulator assembly 10 is set to modulate at, which may be redundantly controlled by the valve springs 38 and 48, respectively.

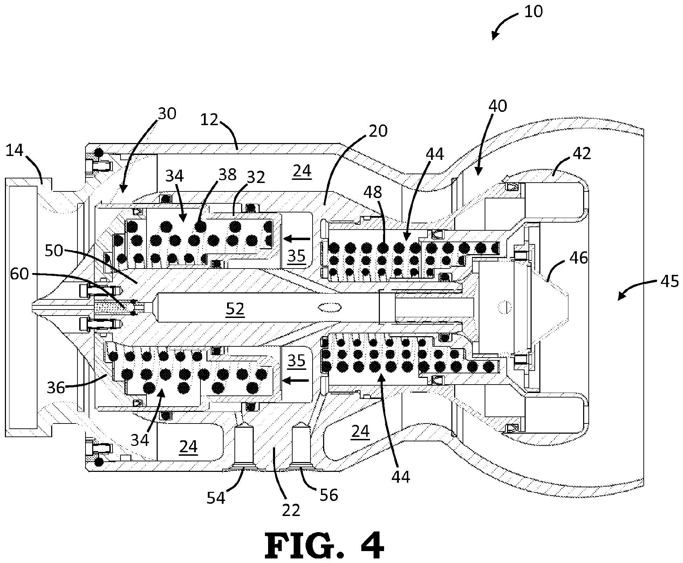

The first stage regulator 30 may begin modulating automatically when forces generated by fluid pressure in the second chamber 35 exceeds forces that are generated by the valve springs 38 and atmospheric air pressure within the first chamber 34. Thus, as generally shown in **FIG. 4**, the first stage pressure regulator 30 may be in a modulated position and the second stage pressure regulator 40 may be in the un-modulated or failed open position.

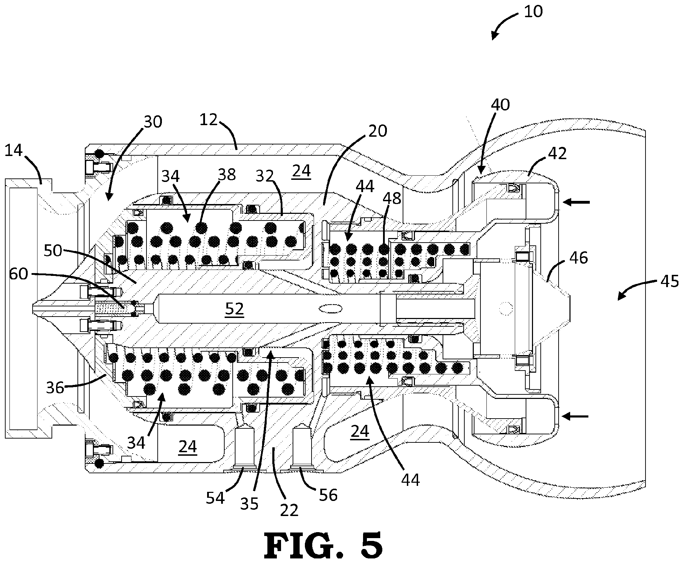

The second stage regulator 40 may begin modulating automatically when forces generated by fluid pressure in the fourth chamber 45 exceeds forces that are generated by the valve springs 48 and atmospheric air pressure within the third chamber 44. Thus, as generally shown in **FIG. 5**, the first stage pressure regulator 30 may be in the un-modulated or failed open position, and the second stage pressure regulator 40 may be in a modulated position.

When the outlet pressure of the refueling coupling regulator assembly 10 forces generated by fluid pressure in the second chamber 35 and in the fourth chamber 45, respectively, exceeds the predetermined modulated pressure, the first and second pressure regulators 30 and 40 in modulated positions, such as described above (*i.e.*, when neither the first regulator 30 or the second regulator 40 has failed open).

The foregoing descriptions of specific embodiments of the present invention have been presented for purposes of illustration and description. They are not intended to be exhaustive or to limit the invention to the precise forms disclosed, and various modifications and variations are possible in light of the above teaching. The embodiments were chosen and described in order to explain the principles of the invention and its practical application, to thereby enable others skilled in the art to utilize the invention and various embodiments with various modifications as are suited to the particular use contemplated. It is intended that the scope of the invention be defined by the claims and their equivalents.

## Claims

1. A refueling coupling regulator assembly (10) comprising:
a housing (12) forming a fluid path (24);
a first stage pressure regulator (30) provided within the housing (12), wherein the first stage pressure regulator is operable between an un-modulated position and a modulated position to regulate a flow of fluid through the housing;
a second stage pressure regulator (40) provided within the housing (12), wherein the second stage pressure regulator is operable between an un-modulated position and a modulated position to regulate a flow of fluid through the housing, and wherein the first stage pressure regulator (30) and the second stage pressure regulator (40) are operable independent of one another; and
an inner valve body (20) disposed within the housing (12), wherein the first and second stage pressure regulators (30, 40) are supported on the inner valve body; and
wherein the first stage pressure regulator (30) includes a valve member (32), and a portion of the valve member separates a first chamber (34) and a second chamber (35) within the inner valve body (20);
**characterized in that** the inner valve body (20) defines a center passage (52) which provides fluid communication between the second chamber (35) of the inner valve body (20) and an outlet opening of the housing (12).

2. The refueling coupling regulator assembly of claim 1, wherein the second stage pressure regulator (40) includes a valve member (42), and a portion of the valve member separates a third chamber (44) and a fourth chamber (45) within the inner valve body (20).

3. The refueling coupling regulator assembly of claim 2, wherein the fourth chamber (45) of the inner valve body (20) is in fluid communication with an outlet opening of the housing (12).

4. The refueling coupling regulator assembly of claim 2, wherein at least one valve spring (38) is provided within the first chamber (34) of the inner valve body (20) to bias the valve member (32) of the first stage pressure regulator (30) in the un-modulated position.

5. The refueling coupling regulator assembly of claim 4, wherein at least one valve spring (48) is provided within the third chamber (44) of the inner valve body (20) to bias the valve member (42) of the second stage pressure regulator (40) in the un-modulated position.

6. The refueling coupling regulator assembly of claim 2, wherein a first vent (54) extends through the housing (12) and provides fluid communication between an exterior of the housing and the first chamber (34) of the inner valve body (20).

7. The refueling coupling regulator assembly of claim 6, wherein a second vent (56) extends through the housing (12) and provides fluid communication between an exterior of the housing and the third chamber (44) of the inner valve body (20).

8. The refueling coupling regulator assembly of claim 5, wherein the first stage pressure regulator (30) modulates when fluid pressure in the second chamber (35) exceeds the spring forces in the first chamber (34).

9. The refueling coupling regulator assembly of claim 8, wherein the second stage pressure regulator (40) modulates when fluid pressure in the fourth chamber (45) exceeds the spring forces in the third chamber (44).

10. The refueling coupling regulator assembly of any of the preceding claims
wherein the fluid path (24) extends through the housing (12);
an inner valve body (20) is disposed within the housing (12);
a first stage pressure regulator (30) supported on the inner valve body (20) near an inlet opening of the housing, wherein the first stage pressure regulator includes a valve member (32) that is operable between an un-modulated position and a modulated position to regulate a flow of fluid through the housing; and
the second stage pressure regulator (40) is supported on the inner valve body (20) near an outlet opening of the housing, wherein the second stage pressure regulator includes a valve member (42) that is operable between the un-modulated position and the modulated position to regulate a flow of fluid through the housing, and wherein the first stage pressure regulator (30) and the second stage pressure regulator (40) are operable independent of one another.

## Patentansprüche

1. Betankungskupplungsregleranordnung (10) versehen mit:
einem Gehäuse (12), welches einen Fluidweg (24) bildet;
einem Erststufen-Druckregler (30), der innerhalb des Gehäuses (12) vorgesehen ist, wobei der Erststufen-Druckregler zwischen einer nicht modulierten Position und einer modulierten Position betätigbar ist, um einen Fluidstrom durch das Gehäuse zu regeln;
einem Zweitstufen-Druckregler (40), der vorgesehen ist, wobei der Zweitstufen-Druckregler zwischen einer nicht modulierten Position und einer modulierten Position betätigbar ist, um einen Fluidstrom durch das Gehäuse zu regeln, und wobei der Erststufen-Druckregler (30) und der Zweitstufen-Druckregler (40) unabhängig voneinander betätigbar sind; und
einem inneren Ventilkörper (20), der innerhalb des Gehäuses (12) angeordnet ist, wobei die Erststufen-und Zweitstufen-Druckregler (30, 40) an dem inneren Ventilkörper abgestützt sind; und
wobei der Erststufen-Druckregler (30) ein Ventilbauteil (32) umfasst und ein Teil des Ventilbauteils eine erste Kammer (34) und eine zweite Kammer (35) innerhalb des inneren Ventilkörpers (20) voneinander trennt;
**dadurch gekennzeichnet, dass** der innere Ventilkörper (20) einen zentralen Durchlass (52) bestimmt, der für eine Fluidverbindung zwischen der zweiten Kammer (35) des inneren Ventilkörpers (20) und einer Auslassöffnung des Gehäuses (12) sorgt.

2. Betankungskupplungsregleranordnung gemäß Anspruch 1, bei welcher der Zweitstufen-Druckregler (40) ein Ventilbauteil (42) umfasst und ein Bereich des Ventilkörpers eine dritte Kammer (44) und eine vierte Kammer (45) innerhalb des inneren Ventilkörpers (20) voneinander trennt.

3. Betankungskupplungsregleranordnung gemäß Anspruch 2, bei welcher die vierte Kammer (45) des inneren Ventilkörpers (20) in Fluidverbindung mit einer Auslassöffnung des Gehäuses (12) steht.

4. Betankungskupplungsregleranordnung gemäß Anspruch 2, bei welcher mindestens eine Ventilfeder (38) innerhalb der ersten Kammer (34) des inneren Ventilkörpers (20) vorgesehen ist, um das Ventilbauteil (32) des Erststufen-Druckreglers (30) in die nicht modulierte Position vorzuspannen.

5. Betankungskupplungsregleranordnung gemäß Anspruch 4, bei welcher mindestens eine Ventilfeder (48) innerhalb der dritten Kammer (44) des inneren Ventilkörpers (20) vorgesehen ist, um das Ventilbauteil (42) des Zweitstufen-Druckreglers (40) in die nicht modulierte Position vorzuspannen.

6. Betankungskupplungsregleranordnung gemäß Anspruch 2, bei welcher sich eine erste Lüftung (54) durch das Gehäuse (12) erstreckt und für eine Fluidverbindung zwischen einem Äußeren des Gehäuses und der ersten Kammer (34) des inneren Ventilkörpers 20) sorgt.

7. Betankungskupplungsregleranordnung gemäß Anspruch 6, bei welcher sich eine zweite Lüftung (56) durch das Gehäuse (12) erstreckt und für eine Fluidverbindung zwischen einem Äußeren des Gehäuses und der dritten Kammer (44) des inneren Ventilkörpers 20) sorgt.

8. Betankungskupplungsregleranordnung gemäß Anspruch 5, bei welcher der Erststufen-Druckregler (30) moduliert, wenn der Fluiddruck in der zweiten Kammer (35) die Federkräfte in der ersten Kammer (34) übersteigt.

9. Betankungskupplungsregleranordnung gemäß Anspruch 8, bei welcher der Zweitstufen-Druckregler (40) moduliert, wenn der Fluiddruck in der vierten Kammer (45) die Federkräfte in der dritten Kammer (44) übersteigt.

10. Betankungskupplungsregleranordnung gemäß einem der vorhergehenden Ansprüche, bei welcher der Fluidweg (24) durch das Gehäuse (12) verläuft;
ein innerer Ventilkörper (20) innerhalb des Gehäuses (12) vorgesehen ist;
ein Erststufen-Druckregler (30) an dem inneren Ventilkörper (20) nahe einer Einlassöffnung des Gehäuses abgestützt ist, wobei der Erststufen-Druckregler ein Ventilbauteil (32) umfasst, welches zwischen einer nicht modulierten Position und einer modulierten Position betätigbar ist, um einen Fluidstrom durch das Gehäuse zu regeln; und
der Zweitstufen-Druckregler (40) an dem inneren Ventilkörper (20) nahe einer Auslassöffnung des Gehäuses abgestützt ist, wobei der Zweitstufen-Druckregler ein Ventilbauteil (42) umfasst, welches zwischen einer nicht modulierten Position und einer modulierten Position betätigbar ist, um einen Fluidstrom durch das Gehäuse zu regeln, und wobei der Erststufen-Druckregler (30) und der Zweitstufen-Druckregler (40) unabhängig voneinander betätigbar sind.

## Revendications

1. Ensemble régulateur de couplage de ravitaillement en carburant (10) comprenant :
un boîtier (12) formant une trajectoire de fluide (24) ;
un régulateur de pression de premier étage (30) prévu à l'intérieur du boîtier (12), dans lequel le régulateur de pression de premier étage peut fonctionner entre une position non modulée et une position modulée pour réguler un écoulement de fluide à travers le boîtier ;
un second régulateur de pression de second étage (40) prévu à l'intérieur du boîtier (12), dans lequel le régulateur de pression de second étage peut fonctionner entre une position non modulée et une position modulée pour réguler un écoulement de fluide à travers le boîtier, et dans lequel le régulateur de pression de premier étage (30) et le régulateur de pression de second étage (40) peuvent fonctionner indépendamment l'un de l'autre ; et
un corps de valve interne (20) disposé à l'intérieur du boîtier (12), dans lequel les régulateurs de pression de premier et second étage (30, 40) sont supportés sur le corps de valve interne ; et
dans lequel le régulateur de pression de premier étage (30) comprend un élément de valve (32) et une partie de l'élément de valve sépare une première chambre (34) et une deuxième chambre (35) à l'intérieur du corps de valve interne (20) ;
**caractérisé en ce que** le corps de valve interne (20) définit un passage central (52) qui fournit la communication de fluide entre la deuxième chambre (35) du corps de valve interne (20) et une ouverture de sortie du boîtier (12).

2. Ensemble régulateur de couplage de ravitaillement en carburant selon la revendication 1, dans lequel le régulateur de pression de second étage (40) comprend un élément de valve (42) et une partie de l'élément de valve sépare une troisième chambre (44) et une quatrième chambre (45) à l'intérieur du corps de valve interne (20).

3. Ensemble régulateur de couplage de ravitaillement en carburant selon la revendication 2, dans lequel la quatrième chambre (45) du corps de valve interne (20) est en communication de fluide avec une ouverture de sortie du boîtier (12).

4. Ensemble régulateur de couplage de ravitaillement en carburant selon la revendication 2, dans lequel au moins un ressort de valve (38) est prévu à l'intérieur de la première chambre (34) du corps de valve interne (20) pour solliciter l'élément de valve (32) du régulateur de pression de premier étage (30) dans la position non modulée.

5. Ensemble régulateur de couplage de ravitaillement en carburant selon la revendication 4, dans lequel au moins un ressort de valve (48) est prévu à l'intérieur de la troisième chambre (44) du corps de valve interne (20) pour solliciter l'élément de valve (42) du régulateur de pression de second étage (40) dans la position non modulée.

6. Ensemble régulateur de couplage de ravitaillement en carburant selon la revendication 2, dans lequel un premier évent (54) s'étend à travers le boîtier (12) et fournit la communication de fluide entre un extérieur du boîtier et la première chambre (34) du corps de valve interne (20).

7. Ensemble régulateur de couplage de ravitaillement en carburant selon la revendication 6, dans lequel un second évent (56) s'étend à travers le boîtier (12) et fournit la communication de fluide entre un extérieur du boîtier et la troisième chambre (44) du corps de valve interne (20).

8. Ensemble régulateur de couplage de ravitaillement en carburant selon la revendication 5, dans lequel le régulateur de pression de premier étage (30) réalise une modulation lorsque la pression de fluide dans la deuxième chambre (35) dépasse les forces de rappel dans la première chambre (34).

9. Ensemble régulateur de couplage de ravitaillement en carburant selon la revendication 8, dans lequel le régulateur de pression de second étage (40) réalise une modulation lorsque la pression de fluide dans la quatrième chambre (45) dépasse les forces de rappel dans la troisième chambre (44).

10. Ensemble régulateur de couplage de ravitaillement en carburant selon l'une quelconque des revendications précédentes, dans lequel la trajectoire de fluide (24) s'étend à travers le boîtier (12) ;
un corps de valve interne (20) est disposé à l'intérieur du boîtier (12) ;
un régulateur de pression de premier étage (30) supporté sur le corps de valve interne (20) à proximité d'une ouverture d'entrée du boîtier, dans lequel le régulateur de pression de premier étage comprend un élément de valve (32) qui peut fonctionner entre une position non modulée et une position modulée pour réguler un écoulement de fluide à travers le boîtier ; et
le régulateur de pression de second étage (40) est supporté sur le corps de valve interne (20) à proximité de l'ouverture de sortie du boîtier, dans lequel le régulateur de pression de second étage comprend un élément de valve (42) qui peut fonctionner entre la position non modulée et la position modulée pour réguler un écoulement de fluide à travers le boîtier, et dans lequel le régulateur de pression de premier étage (30) et le régulateur de pression de second étage (40) peuvent fonctionner indépendamment l'un de l'autre.
